# EUROPEAN PATENT APPLICATION

(11) **EP 4 725 916 A1**
(43) Date of publication of application: **15.04.2026**
(21) Application number: 24927620.5
(22) Date of filing: 11.11.2024
(51) Int. Cl.: C02F 1/64, C02F 1/66, C02F 1/52, C02F 103/16, C02F 101/20

(54) **METHOD FOR PURIFYING WASTEWATER**

(30) Priority: 31.07.2024 KR 20240101655
(71) Applicant: Korea Zinc Co., Ltd., Seoul 03159 (KR)
(72) Inventor: KIM, Seung Hyun, Ulsan 44536 (KR); CHOI, Heon Sik, Ulsan 44696 (KR)
(74) Representative: Angerhausen, Christoph
(86) International application number: PCT/KR2024/017724
(87) International publication number: WO 2026/029276

(57) **Abstract**

A wastewater purification method according to the present disclosure comprises selectively removing manganese from wastewater derived from a valuable metal recovery process.

## Description

### TECHNICAL FIELD

The present disclosure relates to a wastewater purification method, and more particularly, to a method of purifying wastewater derived from a valuable metal recovery process.

### BACKGROUND

With the recent expansion of the battery electric vehicle (BEV) market, the demand for secondary batteries is increasing. Scraps from waste batteries or waste cathode materials generated during the manufacture of secondary batteries or discarded after use contain valuable metals such as nickel and cobalt. Recently, there has been active development of technologies for recovering and recycling valuable metals from secondary batteries.

Valuable metals such as nickel and cobalt may be recovered using a solvent extraction method after dissolving a raw material for secondary batteries in acid. The solvent extraction method utilizes the principle of extracting metal ions from an aqueous solution into an organic solvent. When recovering valuable metals such as nickel and cobalt using the solvent extraction method, wastewater containing manganese, magnesium, sodium, and others is typically generated. This wastewater contains large amounts of manganese and magnesium, which may cause issues such as environmental pollution if the wastewater is discharged without purification. Therefore, a purification process is needed to remove manganese, magnesium, and other contaminants from the wastewater. However, the wastewater purification process often generates a large amount of waste.

### SUMMARY

An object of the present disclosure is to provide a wastewater purification method capable of reducing the amount of waste generated when purifying wastewater derived from a valuable metal recovery process.

A method of purifying wastewater according to the one aspect of the present disclosure comprises selectively removing manganese (Mn) from wastewater derived from a valuable metal recovery process.

Accroding to the one aspect of the present disclosure, in the selectively removing manganese, the manganese may be precipitated as a manganese oxide from the wastewater.

Accroding to the one aspect of the present disclosure, the manganese oxide may be one or more selected from a group consisting of Mn₃O₄, Mn₂O₃, and MnO₂.

The method of purifying wastewater according to the one aspect of the present disclosure, may further comprise separating the manganese oxide from the wastewater.

Accroding to the one aspect of the present disclosure, the selectively removing manganese may include controlling a pH of the wastewater; and controlling an oxidation reduction potential (ORP) of the wastewater.

Accroding to the one aspect of the present disclosure, in the controlling the pH of the wastewater, the pH of the wastewater may be controlled to 7 or higher.

Accroding to the one aspect of the present disclosure, the controlling the pH of the wastewater may include adding a sodium hydroxide (NaOH) to the wastewater.

Accroding to the one aspect of the present disclosure, in the controlling the ORP of the wastewater, the ORP of the wastewater may be controlled to a range between -200 mV and 900 mV.

Accroding to the one aspect of the present disclosure, the controlling the ORP of the wastewater may include adding oxygen to the wastewater.

Accroding to the one aspect of the present disclosure, the adding oxygen to the wastewater may be performed for 4 hours or longer.

Accroding to the one aspect of the present disclosure, the selectively removing manganese may be performed at a temperature between 40 °C and 90 °C.

Accroding to the one aspect of the present disclosure, the valuable metal recovery process may be a process for recovering nickel and cobalt from a waste battery material or waste cathode material.

Accroding to the one aspect of the present disclosure, the wastewater derived from the valuable metal recovery process may contain manganese, magnesium, and a sulfate.

Accroding to the one aspect of the present disclosure, the wastewater derived from the valuable metal recovery process may further contain one or more selected from a group consisting of a metal and a non-ferrous metal.

Accroding to the one aspect of the present disclosure, the metal and non-ferrous metal may be capable of precipitating in the form of a hydroxide when the pH of the wastewater ranges from 7 to 9.

Accroding to the one aspect of the present disclosure, the metal and non-ferrous metal may include one or more selected from a group consisting of zinc, iron, nickel, cobalt, manganese, and magnesium.

The method of purifying wastewater according to the one aspect of the present disclosure may further comprise reverse-neutralization that controlls the pH of the wastewater to a range between 6 and 8 after selectively removing the manganese from the wastewater.

The method of purifying wastewater according to the present disclosure includes selectively removing manganese from wastewater derived from a valuable metal recovery process. Compared to a conventional method of processing both manganese and magnesium through a single purification process, this method may reduce the amount of neutralizing agent used, significantly reducing the amount of waste generated. In addition, the wastewater from which manganese has been selectively removed according to the present disclosure meets discharge standards for the concentrations of wastewater components (e.g., manganese, magnesium, and sodium), making direct discharge possible. This may reduce the amount of waste that could otherwise be generated in the process of purifying the wastewater.

### BRIEF DESCRIPTION OF THE DRAWINGS

FIG. 1 is a process flow diagram of a wastewater purification method according to one embodiment of the present disclosure.
FIG. 2 illustrates the Pourbaix Diagram of manganese.

### DETAILED DESCRIPTION

Hereinafter, specific details for implementing the present disclosure will be described in detail with reference to the accompanying drawings. However, in the following description, specific descriptions related to widely known functions and configurations will be omitted if such descriptions might unnecessarily obscure the gist of the present disclosure.

In the accompanying drawings, the same or corresponding elements are denoted by the same reference numerals. In the following descriptions of the embodiments, descriptions of the same or corresponding elements may be omitted. However, even if the descriptions of the elements are omitted, it is not intended that such elements are not included in a certain embodiment.

Terms used in the present disclosure will be briefly described, followed by a detailed description of disclosed embodiments. Terms used in this specification have been chosen as much as possible from commonly used general terms while taking into account functions in the present disclosure, but the terms may vary depending on the intention of those skilled in the art, precedents, the emergence of new technologies, and others. Additionally, in certain cases, the terms may have been arbitrarily chosen by the applicant, and in such cases, the meaning will be described in detail in the relevant description sections of the invention. Therefore, the terms used in the present disclosure are to be defined based on the meanings of the terms and the overall context of the present disclosure, rather than merely the names of the terms.

In the present disclosure, a singular form is intended to include a plural meaning unless it is clearly stated otherwise in the context. Additionally, a plural form is intended to include a singular meaning unless it is clearly stated otherwise in the context.

When it is stated that a certain part "includes" a certain component, it means that, unless specifically indicated otherwise, other components may also be included, not excluded.

The description of "A and/or B" in the present disclosure means A, or B, or both A and B.

The advantages and features of the disclosed embodiments and methods for achieving them will become clear by referring to the embodiments described below in conjunction with the accompanying drawings. However, the present disclosure is not limited to the embodiments disclosed below and may be implemented in various other forms. The present embodiments are merely provided to make the present disclosure complete and to fully convey the scope of the invention to those skilled in the art.

In general, a process of recovering valuable metals such as nickel and cobalt from waste battery materials or waste cathode materials generates wastewater containing manganese and magnesium in the form of a sulfate. Conventionally, to purify such wastewater, a neutralizing agent has been added to increase the pH of wastewater to 10 to 11, thereby precipitating and removing manganese and magnesium from the wastewater. Although the purified wastewater, with both manganese and magnesium precipitated and removed, meets discharge standards, a large amount of neutralizing agent has been required to remove large amounts of manganese and magnesium contained in the wastewater. For this reason, a calcium hydroxide (Ca(OH)₂), which is relatively inexpensive, has conventionally been used as the neutralizing agent. When the calcium hydroxide is used as the neutralizing agent, manganese and magnesium contained in the wastewater are precipitated and removed in the form of hydroxides, as in Reaction Formulas 1 and 2, and a sulfate contained in the wastewater are precipitated and removed in the form of a calcium sulfate (CaSO₄).

[Reaction Formula 1] MnSO₄ + Ca(OH)₂ → Mn(OH)₂ + CaSO₄

[Reaction Formula 2] MgSO₄ + Ca(OH)₂ → Mg(OH)₂ + CaSO₄

However, according to such a conventional method, a large amount of precipitated waste such as a manganese hydroxide, magnesium hydroxide, and calcium sulfate is generated, leading to increased landfill costs and overall process expenses. Moreover, the process of landfilling a large amount of waste may cause environmental pollution.

A wastewater purification method according to the present disclosure is characterized by including selectively removing manganese from wastewater derived from a valuable metal recovery process. Compared to the conventional method of processing both manganese and magnesium through a single purification process, the wastewater purification method according to the present disclosure may reduce the amount of neutralizing agent used, thereby significantly reducing the amount of waste generated. In addition, the wastewater from which manganese has been selectively removed according to the present disclosure meets discharge standards, making direct discharge possible. This may reduce the amount of waste that could otherwise be additionally generated in the process of purifying the wastewater.

According to the present disclosure, in the selectively removing manganese, the manganese may be precipitated as a manganese oxide from the wastewater. The wastewater purification method of the present disclosure, which precipitates and removes manganese in the form of a manganese oxide, may significantly reduce the amount of waste generated, compared to the conventional method which precipitates and removes manganese in the form of a manganese hydroxide. The manganese oxide may be one or more selected from a group consisting of Mn₃O₄, Mn₂O₃, and MnO₂. For example, Mn(OH)₂, corresponding to a manganese hydroxide, contains 62 wt% of manganese, meaning that 1.6 tons of Mn(OH)₂ needs to be precipitated from the wastewater to remove 1 ton of manganese. On the other hand, Mn₃O₄, Mn₂O₃, and MnO₂, corresponding to a manganese oxide, contains 72 wt%, 70 wt%, and 63 wt% of manganese, respectively, meaning that 1.39 tons of Mn₃O₄, 1.44 tons of Mn₂O₃, or 1.58 tons of MnO₂ needs to be precipitated from the wastewater to remove 1 ton of manganese. Therefore, the wastewater purification method of the present disclosure, which removes manganese in the form of a manganese oxide, may significantly reduce the amount of precipitated waste, compared to the conventional method which removes manganese in the form of a manganese hydroxide.

The wastewater purification method according to the present disclosure may further include separating the manganese oxide from the wastewater. The separated manganese oxide may be used in subsequent processes such as the production of a manganese sulfate.

The selectively removing manganese according to the present disclosure may include controlling a pH of the wastewater and controlling an oxidation reduction potential (ORP) of the wastewater. Specifically, the wastewater purification method according to the present disclosure may selectively remove manganese from the wastewater by controlling both the pH and ORP of the wastewater. At this time, manganese may be precipitated and removed in the form of a manganese oxide. The controlling the pH of the wastewater and the controlling the ORP of the wastewater may be performed either simultaneously or separately.

In the controlling the pH of the wastewater, the pH of the wastewater may be controlled to 7 or higher, specifically between 7 and 10, and more specifically between 7 and 8.5. When the pH of the wastewater falls within the above numerical range, manganese becomes the form of a precipitable compound, while magnesium precipitation from the wastewater may be prevented, making it easier to selectively remove manganese from the wastewater.

According to one embodiment of the present disclosure, the controlling the pH of the wastewater may include adding a sodium hydroxide (NaOH) to the wastewater. The wastewater purification method according to the present disclosure selectively removes manganese from among various components contained in the wastewater, thereby reducing the amount of basic auxiliary material added to the wastewater. Therefore, in the wastewater purification method of the present disclosure, a sodium hydroxide, which is relatively more expensive than a calcium hydroxide, may be used as the basic auxiliary material. When the sodium hydroxide is added as the basic auxiliary material to the wastewater, a sulfate contained in the wastewater exists in the form of a sodium sulfate (Na₂SO₄) dissolved in the wastewater. Thus, the wastewater purification method of the present disclosure may reduce the amount of precipitated waste compared to the conventional method which uses a calcium hydroxide to precipitate and remove a sulfate as a calcium sulfate (CaSO₄). According to the wastewater purification method of the present disclosure, a calcium sulfate is not precipitated from the wastewater during the selectively removing manganese.

In the controlling the ORP of the wastewater, the ORP of the wastewater may be controlled to a range between -200 mV and 900 mV, specifically between -200 mV and 500 mV, and more specifically between -200 mV and 200 mV. The measurement of the ORP of the wastewater may include the use of a reference electrode such as a silver/silver chloride electrode, but is not limited thereto, and various electrodes suitable for measuring the ORP may be used. When the ORP of the wastewater falls within the above numerical range, manganese may be precipitated and removed in the form of an oxide rather than a hydroxide, resulting in a reduction in the amount of precipitated waste.

According to one embodiment of the present disclosure, the controlling the ORP of the wastewater may include adding oxygen to the wastewater. When oxygen is introduced into the wastewater, the ORP of the wastewater may increase. The adding oxygen to the wastewater may be performed for 4 hours or longer, and specifically for 4 to 10 hours. If the reaction time of the adding oxygen to the wastewater falls within the above numerical range, the ORP of the wastewater may sufficiently increase, raising the possibility of manganese being precipitated as a manganese oxide, rather than a manganese hydroxide.

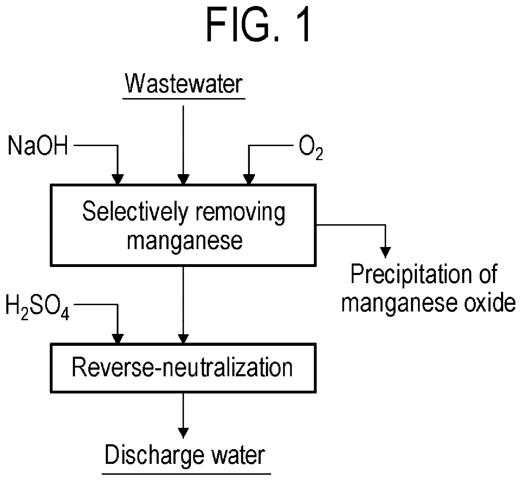

FIG. 1 is a process flow diagram of a wastewater purification method according to one embodiment of the present disclosure. According to one embodiment of the present disclosure, the wastewater purification method may include adding a sodium hydroxide (NaOH) and oxygen (O₂) into wastewater derived from a valuable metal recovery process to selectively remove manganese, adding a sulfuric acid (H₂SO₄) to the wastewater to reverse-neutralize the wastewater, and discharging the reverse-neutralized wastewater. At this time, the wastewater derived from the valuable metal recovery process may contain manganese and magnesium. During the selective removal of manganese, manganese may be precipitated from the wastewater in the form of a manganese oxide as in the following reaction formulas 3 to 5.

[Reaction Formula 3] 6 MnSO₄ + 12 NaOH + O₂ → 2 Mn₃O₄ + 6 Na₂SO₄ + 6 H₂O

[Reaction Formula 4] 4 MnSO₄ + 8 NaOH + O₂ → 2 Mn₂O₃ + 4 Na₂SO₄ + 4 H₂O

[Reaction Formula 5] 2 MnSO₄ + 4 NaOH + O₂ → 2 MnO₂ + 2 Na₂SO₄ + 2 H₂O

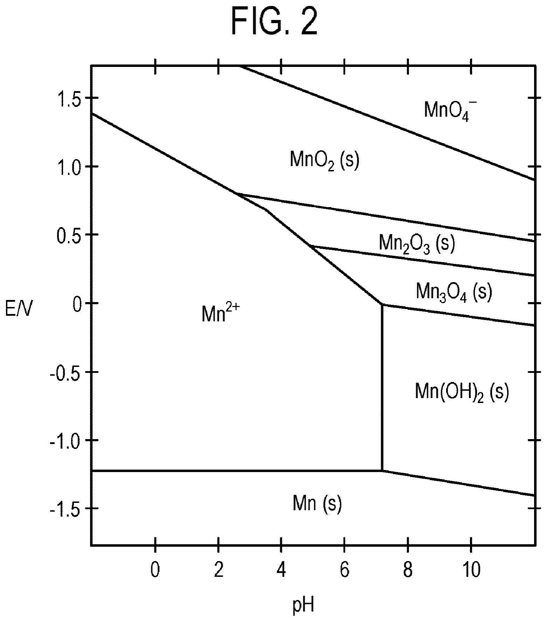

Meanwhile, FIG. 2 illustrates the Pourbaix diagram of manganese. The Pourbaix diagram is a graph that represents the thermodynamically most stable species or phase of an element as a function of potential (E_{H}) and pH. As illustrated in FIG. 2, manganese in a solution possesses the thermodynamically most stable species and phase under specific potential and pH conditions. For example, manganese may exist in the form of manganese ions (Mn²⁺), solid manganese metal (Mn(s)), solid manganese hydroxide (Mn(OH)₂(s)), or solid manganese oxide (Mn₃O₄(s), Mn₂O₃(s), MnO₂(s), or MnO₄(s)).

The wastewater purification method of the present disclosure may controll the pH and ORP of wastewater to ensure that manganese exists in the form of a manganese oxide, and may then remove the precipitated manganese oxide, allowing for the selective removal of manganese from the wastewater. For example, when the pH of wastewater is controlled to 8 and the ORP is controlled to 200 mV as illustrated in FIG. 2, Mn₃O₄ may be precipitated as a solid from the wastewater. By removing the precipitated Mn₃O₄, manganese may be selectively removed from the wastewater.

The selective removal of manganese may be performed at a temperature between 40 °C and 90 °C, specifically between 50 °C and 90 °C, and more specifically between 60 °C and 80 °C. When the temperature during the selective removal of manganese falls within the above numerical range, the overall manganese component contained in the wastewater may be removed, along with other impurities, while leaving magnesium and sodium components.

According to one embodiment of the present disclosure, a valuable metal recovery process may be a process for recovering nickel and cobalt from a waste battery material or waste cathode material. For example, the valuable metal recovery process may be a process of leaching a sulfate solution from a waste battery material and recovering valuable metals from the sulfate solution through a conventional method such as a solvent extraction method.

The waste battery material may be recovered through a pretreatment process of waste batteries. At this time, the pretreatment process may include steps such as discharging, dismantling, crushing/pulverizing, drying, and roasting. The waste battery material may be waste battery scraps, black mass (raw material processed through a recycling process of waste batteries, waste cathode material generated during the production of a cathode material, or combinations thereof, but are not limited thereto.

The sulfate solution may be extracted from the waste battery material through a hydrometallurgical process. For example, the sulfate solution may be leached from the waste battery material recovered through the aforementioned pretreatment process. The sulfate solution may also be leached not only from the waste battery material but also from one or more selected from the group consisting of a nickel ore, nickel mixed hydroxide precipitate (MHP), and nickel oxide. A metal sulfate contained in the sulfate solution may be one or more sulfates selected from the group consisting of nickel, cobalt, manganese, lithium, copper and aluminum.

According to the present disclosure, the wastewater derived from the valuable metal recovery process may be wastewater generated after recovering nickel and cobalt from the sulfate solution. The wastewater derived from the valuable metal recovery process may contain manganese, magnesium and a sulfate.

The wastewater derived from the valuable metal recovery process may further contain one or more selected from the group consisting of a metal and a non-ferrous metal. At this time, these metal and non-ferrous metal may be capable of precipitating in the form of a hydroxide when the pH of wastewater ranges from 7 to 9. In other words, the wastewater purification method according to the present disclosure may be applied even when wastewater further contains a metal and non-ferrous metal that are capable of precipitating in the form of a hydroxide when the pH of wastewater ranges from 7 to 9. The metal and non-ferrous metal may include one or more selected from the group consisting of zinc, iron, nickel, cobalt, manganese and magnesium, but are not limited thereto.

The wastewater purification method according to the present disclosure may further include reverse-neutralization that controlls the pH of wastewater to a range between 6 and 8 after selectively removing manganese from the wastewater. The reverse-neutralization may refer to controlling the pH of wastewater to ensure that the wastewater, from which manganese has been selectively removed, has a pH suitable for discharge standards.

According to one embodiment of the present disclosure, the reverse-neutralization may include adding an acid to the wastewater. Specifically, the types of acids that may be added may include one or more selected from the group consisting of H₂SO₄, HCl and HNO₃, but are not limited thereto.

Hereinafter, examples of the present disclosure will be described in detail to enable those skilled in the art, to which the present disclosure pertains, to easily implement the present disclosure. However, the present disclosure may be implemented in various different forms and is not limited to the examples described herein.

### Examples and Comparative Examples

### Example 1

A sulfate solution (wastewater) of 2L was prepared with the concentration of each metal ion as illustrated in Table 1 below. A sodium hydroxide (NaOH) and oxygen were added to the wastewater, and the wastewater was purified by reacting for 4 hours at a temperature of 70 °C.

**[Table 1]**

| Component | Mn | Mg | Na | Zn | Fe |
|---|---|---|---|---|---|
| Concentration | 3~5(g/L) | 4~7(g/L) | 5~15(g/L) | 20~1000(mg/L) | 20~1000(mg/L) |

### Example 2

The wastewater purification was performed in the same manner as in Example 1, except that wastewater was reacted for 8 hours at a temperature of 70 °C after adding a sodium hydroxide and oxygen to the wastewater of 2L.

### Comparative Example 1

The wastewater purification was performed in the same manner as in Example 1, except that oxygen was not added to wastewater.

### Experimental Example 1: Amount of Manganese Residue Precipitated and Removed from Wastewater and Type of Compound thereof Depending on Whether Oxygen Was Added

The amount of manganese residue precipitated and removed from the wastewater and the type of compound thereof depending on whether oxygen was added were confirmed in Example 1 and Comparative Example 1, respectively, and the results are illustrated in Table 2 below.

**[Table 2]**

| | Example 1 | Comparative Example 1 |
|---|---|---|
| Amount of Residue (g) | 17~18 | 20~21 |
| Type of Residual Compound | Mn₃O₄ | Mn(OH)₂ |

According to Table 2, it may be observed that in Example 1 where oxygen was added during wastewater purification, the residual compound was a manganese oxide (Mn₃O₄), whereas in Comparative Example 1 where oxygen was not added during wastewater purification, the residual compound was a manganese hydroxide (Mn(OH)₂). In addition, in the case of Example 1 where manganese was precipitated and removed in the form of a manganese oxide, it may be confirmed that the amount of residue generated (amount of precipitate) is less compared to Comparative Example 1 where manganese was precipitated and removed in the form of a manganese hydroxide.

### Experimental Example 2: Change in Concentration of Manganese and Magnesium in Wastewater Over Time Depending on Addition of Oxygen

In the wastewater purification process according to Example 2, changes in the concentrations of manganese and magnesium in the wastewater were monitored over different reaction times depending on the addition of oxygen, and the results are illustrated in Table 3 below.

**[Table 3]**

| Reaction Time (hr) | | 0 | 1 | 2 | 4 | 6 | 8 |
|---|---|---|---|---|---|---|---|
| Concentration (g/L) | Mn | 4.76 | 4.10 | 3.52 | 0.89 | 0.02 | 0.0039 |
| | Mg | 5.25 | 5.20 | 5.19 | 5.17 | 5.16 | 5.16 |

According to Table 3, in the case of Example 2 where a sodium hydroxide and oxygen were added to the wastewater for purification, it may be confirmed that the concentration of manganese significantly decreased as the reaction time progressed. From this, it may be confirmed that the wastewater purification method according to one embodiment of the present disclosure effectively removes manganese selectively from the wastewater.

The present disclosure has been described in connection with certain embodiments in this specification, but it is to be understood that various modifications and alterations may be made without departing from the spirit and scope of the present disclosure as understood by those skilled in the art to which the present disclosure pertains. Furthermore, such modifications and alterations are to be considered as falling within the scope of the claims appended to this specification.

Those skilled in the art to which the present disclosure pertains will recognize that various substitutions, modifications, and alterations may be made without departing from the technical spirit of the present disclosure. Therefore, the present disclosure is not limited to the above-described embodiments and the accompanying drawings.

## Claims

1. A method of purifying wastewater, comprising selectively removing manganese (Mn) from wastewater derived from a valuable metal recovery process.

2. The method of claim 1, wherein in the selectively removing manganese, the manganese is precipitated as a manganese oxide from the wastewater.

3. The method of claim 2, wherein the manganese oxide is one or more selected from a group consisting of Mn₃O₄, Mn₂O₃, and MnO₂.

4. The method of claim 2, further comprising separating the manganese oxide from the wastewater.

5. The method of claim 1, wherein the selectively removing manganese includes:
controlling a pH of the wastewater; and
controlling an oxidation reduction potential (ORP) of the wastewater.

6. The method of claim 5, wherein in the controlling the pH of the wastewater, the pH of the wastewater is controlled to 7 or higher.

7. The method of claim 5, wherein the controlling the pH of the wastewater includes adding a sodium hydroxide (NaOH) to the wastewater.

8. The method of claim 5, wherein in the controlling the ORP of the wastewater, the ORP of the wastewater is controlled to a range between -200 mV and 900 mV.

9. The method of claim 5, wherein the controlling the ORP of the wastewater includes adding oxygen to the wastewater.

10. The method of claim 9, wherein the adding oxygen to the wastewater is performed for 4 hours or longer.

11. The method of claim 1, wherein the selectively removing manganese is performed at a temperature between 40 °C and 90 °C.

12. The method of claim 1, wherein the valuable metal recovery process is a process for recovering nickel and cobalt from a waste battery material or waste cathode material.

13. The method of claim 1, wherein the wastewater derived from the valuable metal recovery process contains manganese, magnesium, and a sulfate.

14. The method of claim 13, wherein the wastewater derived from the valuable metal recovery process further contains one or more selected from a group consisting of a metal and a non-ferrous metal.

15. The method of claim 14, wherein the metal and non-ferrous metal are capable of precipitating in the form of a hydroxide when the pH of the wastewater ranges from 7 to 9.

16. The method of claim 14, wherein the metal and non-ferrous metal include one or more selected from a group consisting of zinc, iron, nickel, cobalt, manganese, and magnesium.

17. The method of claim 1, further comprising reverse-neutralization that controlls the pH of the wastewater to a range between 6 and 8 after selectively removing the manganese from the wastewater.
